# EUROPÄISCHE PATENTSCHRIFT

(11) **EP 3 713 708 B1**
(45) Veröffentlichungstag und Bekanntmachung des Hinweises auf die Patenterteilung: **07.06.2023**
(21) Anmeldenummer: 18800933.6
(22) Anmeldetag: 12.11.2018
(51) Int. Cl.: B23Q 11/00

(54) **FÜHRUNGSSCHABLONE**
GUIDE TEMPLATE
GUIDE DE TRAVAIL

(30) Priorität: 24.11.2017 DE 102017127873
(43) Veröffentlichungstag der Anmeldung: 30.09.2020
(73) Patentinhaber: Festool GmbH, 73240 Wendlingen (DE)
(72) Erfinder: MAJER, Michael, 73274 Notzingen (DE); CAPUTO, Jonathan, 71229 Leonberg (DE)
(74) Vertreter: Patentanwälte Bregenzer und Reule Partnerschaftsgesellschaft mbB
(86) Internationale Anmeldenummer: PCT/EP2018/080900
(87) Internationale Veröffentlichungsnummer: WO 2019/101558

(56) Entgegenhaltungen:
- EP-A1- 2 639 010
- EP-A1- 2 910 353
- DE-A1- 3 525 852
- DE-A1- 4 127 679
- DE-A1- 19 503 994
- DE-A1-102008 008 890
- DE-U1-202015 105 439
- DE-U1-202017 101 885
- US-A1- 2010 244 342

## Beschreibung

Die Erfindung betrifft eine Führungsschablone mit einer Werkzeugführung für ein Arbeitswerkzeug, nämlich ein Bohrwerkzeug oder Fräswerkzeug, zur Herstellung einer Hauptseitenausnehmung an einer Werkstückhauptseitenfläche eines Werkstücks, gemäß dem Oberbegriff des Anspruchs 1.

Eine derartige Führungsschablone ist in DE 35 25 852 A1 beschrieben.

Die Werkstückhauptseitenfläche ist beispielsweise eine Oberseite oder eine Unterseite des Werkstücks, beispielsweise einer Möbelplatte. Die Werkstücknebenseite kann eine Stirnseite des Werkstücks, beispielsweise der Möbelplatte sein. In das Werkstück hinein sind sowohl die Nebenseitenausnehmung als auch die Hauptseitenausnehmung einzubringen, die in einem Schnittbereich miteinander kommunizieren, so dass beispielsweise ein Beschlag in die beiden Werkstückausnehmungen einsetzbar ist.

Eine Herstellung einer derartigen Werkstückausnehmungsanordnung ist kompliziert, weil exakte Maße und Winkelbeziehungen der Werkstückausnehmungen einzuhalten sind, weshalb eine Führungsschablone zur Führung des Arbeitswerkzeugs vorteilhaft ist. Es ist eine Führungsschablone für die Verwendung im Zusammenhang mit sogenannten Biskuitfräsern bekannt, die eine Hauptseitenanschlagfläche mit einer Werkzeugführung aufweist. Bei der bekannten Führungsschablone wird der Eindringvorsprung anhand der Verstelleinrichtung relativ zu der Hauptseitenanschlagfläche verstellt, wodurch sich jedoch die Eindringtiefe des Arbeitswerkzeugs in das Werkstück gleichzeitig verändert. Die Handhabung ist also kompliziert, weil nämlich der Tiefenanschlag nachgestellt werden muss, wenn eine gewünschte Eindringtiefe des Arbeitswerkzeugs in das Werkstück gewünscht ist.

Aus EP 2 910 353 A1 geht eine Kantenfräsmaschine zur fräsenden Bearbeitung einer sich zwischen einer Hauptseitenfläche und einer Nebenseitenfläche erstreckenden Werkstückkante eines Werkstücks hervor.

DE195 03 994 A1 beschreibt eine Bohrvorrichtung zum stirnseitigen Bohren an flachen Bauteilen, beispielsweise Steinplatten oder plattenähnlichen Werkstücken.

Es ist daher die Aufgabe der vorliegenden Erfindung, eine verbesserte Führungsschablone bereitzustellen.

Zur Lösung der Aufgabe ist bei einer Führungsschablone der eingangs genannten Art vorgesehen, dass der Tiefenanschlag und der Eingreifvorsprung an einem Tragkörper angeordnet sind, an dem der Hauptseitenanschlag anhand einer Verstelleinrichtung zur Verstellung eines Hauptseitenanschlag-Abstands der Hauptseitenanschlagfläche zu dem Eingreifvorsprung unter Beibehaltung eines Tiefeneinstell-Abstands zwischen dem Eingreifvorsprung, insbesondere einer von der Hauptseitenanschlagfläche abgewandten Seite des Eingreifvorsprungs und/oder einem Außenumfang des Eingreifvorsprungs, und der Tiefenanschlagfläche verstellbar gelagert ist.

Vorteilhaft ist vorgesehen, dass ein Außenumfang des Eingreifvorsprungs eine Flachgestalt mit einander gegenüberliegenden Flachseiten und sich zwischen den Flachseiten erstreckenden, insbesondere gerundeten, Schmalseiten zur Abstützung in der Nebenseitenausnehmung aufweist.

Bevorzugt ist eine Referenzfläche für den Tiefeneinstell-Abstand eine von der Hauptseitenanschlagfläche abgewandte Seite des Eingreifvorsprungs, insbesondere dessen Flachseite oder Unterseite. Der Tiefeneinstell-Abstand zwischen der Hauptseitenanschlagfläche und dem Eingreifvorsprung kann aber auch auf einen sonstigen Bereich und/oder auf einen Außenumfang des Eingreifvorsprungs bezogen sein. Selbstverständlich kann die eigentliche Bohrung oder Fräsung der Hauptseitenausnehmung anhand des Arbeitswerkzeugs in Bezug auf eine Arbeitsrichtung, entlang derer das Arbeitswerkzeug in das Werkstück einschneidet, vor, im oder hinter dem Außenumfang oder der Außenumfangskontur des Eingreifvorsprungs enden. Mithin kann also beispielsweise sich die Hauptseitenausnehmung über eine von der Werkstückhauptseitenfläche abgewandte Unterseite der Nebenseitenausnehmung hinaus erstrecken. Der Bezug zwischen dem Eingreifvorsprung und der Hauptseitenanschlagfläche, also der Tiefeneinstell-Abstand, bleibt dabei dennoch erhalten.

Das Arbeitswerkzeug ist ein Fräswerkzeug oder Bohrwerkzeug und wird vorzugsweise maschinell angetrieben oder ist maschinell antreibbar. Bevorzugt ist eine Hand-Werkzeugmaschine, beispielsweise eine Bohrmaschine, Schraubmaschine oder Fräsmaschine, zum Antreiben des Arbeitswerkzeugs. Die Führungsschablone und das Arbeitswerkzeug können ein System bilden. Beispielsweise ist der Gegenanschlag an einem für die Führungsschablone geeigneten Arbeitswerkzeug, beispielweise Bohrwerkzeugs, angeordnet. Weiterhin ist es möglich, dass die Hand-Werkzeugmaschine, zum Beispiel eine Bohrmaschine oder Fräsmaschine mit einem insbesondere elektrischen Antriebsmotor einen Bestandteil eines die Führungsschablone umfassenden Systems bildet.

Es ist ein Grundgedanke der vorliegenden Erfindung, dass die Relation zwischen dem Eindringvorsprung und dem Tiefenanschlag gleichbleibt, wohingegen anhand der Verstelleinrichtung der Hauptseitenanschlag verstellt wird, d.h. der Hauptseitenanschlag-Abstand zwischen dem Eingreifvorsprung und somit der Nebenseitenausnehmung und der Werkstückhauptseitenfläche verstellbar ist, ohne die Tiefeneinstellposition des Tiefenanschlags zu verändern. Die Handhabung ist erheblich vereinfacht.

Die Nebenseitenausnehmung wird zunächst in das Werkstück eingebracht, wobei der Hauptseitenanschlag-Abstand zwischen einerseits der Nebenseitenausnehmung und andererseits der Werkstückhauptseitenfläche nicht in allen Fällen gleich oder exakt ist. Die Nebenseitenausnehmung hat beispielsweise eine flach rechteckige Gestalt, wobei die Schmalseiten ausgerundet sind. Somit ergibt sich ein flach rechteckiger Querschnitt der Nebenseitenausnehmung. In der Nebenseitenausnehmung ist beispielsweise ein erstes Beschlagelement des Beschlags einzubringen, welches mit einem Beschlagelement, welches in die Hauptseitenausnehmung einzusetzen ist, verbunden wird oder zu verbinden ist, insbesondere anhand einer Verklemmung, Verspannung oder dergleichen. Die Hauptseitenausnehmung kommuniziert mit der Nebenseitenausnehmung. Die Hauptseitenausnehmung und die Nebenseitenausnehmung schneiden sich in dem Schnittbereich.

Die Tiefenanschlagfläche kann unmittelbar an dem Arbeitswerkzeug angeordnet sein, beispielsweise durch einen Flanschvorsprung oder dergleichen, der an einem Bohrwerkzeug vorgesehen ist, gebildet sein. Es ist aber auch möglich, dass die Tiefenanschlagfläche an einem Maschinenwerkzeug, welches zum Antreiben des Arbeitswerkzeugs vorgesehen ist, vorhanden ist. So kann beispielsweise ein Anschlagstab oder ein sonstiger Anschlagkörper an einer Bohrmaschine oder Fräsmaschine, insbesondere deren Maschinengehäuse, angeordnet sein, der den Gegenanschlag bildet oder aufweist und an der Tiefenanschlagfläche des Tiefenanschlags anschlägt.

Der Nebenseitenanschlag weist zweckmäßigerweise eine Nebenseitenanschlagfläche zur Anlage an der Werkstücknebenseitenfläche auf. Der Eingreifvorsprung steht vor die Nebenseitenanschlagfläche in Richtung der Hauptseitenanschlagfläche, insbesondere parallel zu der Hauptseitenanschlagfläche, vor.

Die Nebenseitenanschlagfläche und die Hauptseitenanschlagfläche der Führungsschablone sind vorzugsweise zueinander winkelig, beispielsweise rechtwinkelig. Die Winkellage der Nebenseitenanschlagfläche und der Hauptseitenanschlagfläche kann eine feste sein, d.h. dass der Winkel nicht verstellbar ist. Es ist aber auch möglich, dass ein Winkel der Nebenseitenanschlagfläche und der Hauptseitenanschlagfläche einstellbar ist. Dazu ist beispielsweise eine Art Gehrungslageranordnung vorteilhaft, mit der die Winkellage der Hauptseitenanschlagfläche und der Nebenseitenanschlag relativ zueinander einstellbar ist.

Weiterhin ist es möglich, dass der Eingreifvorsprung eine Stirnseite oder Stirnfläche aufweist, die zugleich eine Anschlagfläche zum Anschlagen an einem Boden der Nebenseitenausnehmung bildet. Der Eingreifvorsprung kann also mit seiner Stirnfläche oder Stirnseite an dem Boden der Nebenseitenausnehmung anschlagen, so dass dadurch der Nebenseitenanschlag gebildet ist. Es ist weiterhin möglich, dass sowohl die Anschlagfläche an der Stirnseite des Eingreifvorsprungs als auch die Nebenseitenanschlagfläche vorgesehen sind.

Bei einer Ausführungsform der Erfindung kann der Schnittbereich derart vorgesehen sein, dass die Hauptseitenausnehmung quasi in der Nebenseitenausnehmung ausmündet, d.h. nicht vor die Nebenseitenausnehmung vorsteht. Zwischen den beiden Werkstückausnehmungen, der Nebenseitenausnehmung und der Hauptseitenausnehmung, ist dann beispielsweise ein rechtwinkeliger Übergangsabschnitt vorgesehen.

Eine Ausführungsform der Erfindung kann aber auch vorsehen, dass der Tiefenanschlag, insbesondere die Tiefenanschlagfläche, derart eingestellt oder einstellbar ist, dass das Arbeitswerkzeug bezüglich der Führungslängsachse vor eine von der Hauptseitenanschlagfläche abgewandte Seite, beispielsweise eine untere Seite oder eine Flachseite, des Eingreifvorsprungs vorverstellbar ist, bis es an der Tiefenanschlagfläche anschlägt. Somit kann also beispielsweise eine Bohrung hergestellt werden, die die Hauptseitenausnehmung bildet, und die sozusagen die Nebenseitenausnehmung durchbohrt oder durchsetzt oder in Bezug auf eine Längsachse des Arbeitswerkzeugs oder die Führungslängsachse der Werkzeugführung an einer von der Werkstückhauptseitenfläche abgewandten Seite vor die Nebenseitenausnehmung vorsteht.

Ein bevorzugtes Konzept sieht vor, dass der Eingreifvorsprung eine Aussparung, zum Beispiel eine Durchtrittsöffnung, eine vorn offene Öffnung oder dergleichen, für das Arbeitswerkzeug aufweist. Das Arbeitswerkzeug kann durch die Aussparung hindurch geführt sein, ohne den Eingreifvorsprung zu beschädigen. Beispielsweise hat die Aussparung oder Durchtrittsöffnung eine runde, insbesondere kreisrunde Gestalt. Die Aussparung hat zweckmäßigerweise einen Querschnitt, der mit einem Führungsquerschnitt der Werkzeugführung korrespondiert und mit diesem fluchtet. Durch die Aussparung hindurch kann das Arbeitswerkzeug an einer von der Hauptseitenanschlagfläche abgewandten Seite des Eingreifvorsprungs in das Werkstück eingreifen oder einschneiden.

Zweckmäßigerweise ist vorgesehen, dass der Eingreifvorsprung mindestens eine Anlagefläche zur Anlage an dem Werkstück unmittelbar neben der durch das Arbeitswerkzeug herzustellenden Hauptseitenausnehmung aufweist. Beispielsweise ist die Anlagefläche neben der oben genannten Aussparung oder Durchtrittsöffnung für das Arbeitswerkzeug vorgesehen. Die Anlagefläche dient vorteilhaft als Ausreißschutz für das Werkstück, welches dadurch bei der Bearbeitung des Werkstücks durch das Arbeitswerkzeug weniger oder nicht ausreißt.

Ein bevorzugtes Konzept sieht vor, dass die Verstelleinrichtung an der Werkzeugführung angeordnet ist oder durch die Werkzeugführung gebildet ist. Die Werkzeugführung bildet also beispielsweise gleichzeitig mindestens eine Komponente der Verstelleinrichtung.

Die Werkzeugführung weist zweckmäßigerweise eine sogenannte Bohrbuchse oder ein sonstiges Führungselement auf, welches eine Durchtrittsöffnung oder Führungsöffnung für das Arbeitswerkzeug aufweist.

Die Werkzeugführung, insbesondere das Führungselement, beispielsweise die Bohrbuchse, kann einen Innenquerschnitt oder Führungsquerschnitt aufweisen, der mit dem Außenquerschnitt des Arbeitswerkzeugs unmittelbar korreliert, zum Beispiel für ein Bohrwerkzeug kreisrund ist. Der Innenquerschnitt kann aber auch eine langlochartige Gestalt aufweisen, sodass das Arbeitswerkzeug eine Längsbewegung, insbesondere eine oszillierende Längsbewegung, innerhalb des Führungsquerschnitts, ausführen kann.

Vorteilhaft ist beispielsweise, wenn die Verstelleinrichtung anhand eines bezüglich des Tragkörpers entlang der Führungslängsachse verstellbaren Führungselements der Werkzeugführung, insbesondere einer sogenannten Bohrbuchse, gebildet ist und/oder wenn ein bezüglich des Tragkörpers entlang der Führungslängsachse verstellbares Führungselement einen Bestandteil der Verstelleinrichtung bildet.

Bevorzugt ist es, wenn die Tiefenanschlagfläche bezüglich des Tragkörpers feststehend ist. Somit wird sozusagen stets die gleiche Eindringtiefe des Arbeitswerkzeugs vorgegeben.

Es ist aber auch möglich, dass die Führungsschablone eine Tiefeneinstelleinrichtung zur Verstellung einer Relativposition der Tiefenanschlagfläche bezüglich des Eingreifvorsprungs aufweist. Beispielsweise kann die Tiefenanschlagfläche an einer Führungshülse oder einem sonstigen Führungskörper vorgesehen sein, der bezüglich des Eingreifvorsprungs verstellbar ist. Der Tiefeneinstellkörper ist zweckmäßigerweise anhand einer Feststelleinrichtung, insbesondere einer Klemmeinrichtung (einer Schraube oder dergleichen), einer Rasteinrichtung, eine Verriegelungseinrichtung oder dergleichen bezüglich des Eingreifvorsprungs in einer oder mehreren Tiefeneinstellpositionen fixierbar. Bevorzugt ist es jedenfalls, wenn die Tiefenanschlagfläche zwischen mindestens zwei Tiefeneinstellpositionen verstellbar und insbesondere in diesen Tiefeneinstellpositionen fixierbar ist, in denen das Arbeitswerkzeug in unterschiedlichen Tiefen bezüglich der Führungslängsachse in das Werkstück eingreift.

Bevorzugt ist eine geometrische Konfiguration des Tragkörpers wie folgt. Der Tragkörper weist zweckmäßigerweise einen Winkelkörper auf oder wird durch einen Winkelkörper gebildet. Bevorzugt ist es, wenn der Tragkörper einen Tragschenkel und einen Anlageschenkel aufweist, die zueinander winkelig, beispielsweise rechtwinkelig oder etwa rechtwinkelig sind (insbesondere in einem Winkelbereich von ca. 88-92°) sind. Die Verstelleinrichtung ist an dem Tragschenkel angeordnet. Der Nebenseitenanschlag mit dem Eingreifvorsprung oder der Eingreifvorsprung ist an dem Anlageschenkel angeordnet. Beispielsweise ist an dem Anlageschenkel eine oder die Nebenseitenanschlagfläche zur Anlage an der Werkstücknebenseite vorgesehen. Es ist aber auch möglich, dass der Eingreifvorsprung vor dem Anlageschenkel vorsteht, beispielsweise rechtwinkelig vorsteht, und der Anlageschenkel nicht zu einem direkten Kontakt mit der Werkstücknebenseitenfläche vorgesehen und/oder ausgestaltet ist.

Die Werkzeugführung kann ganz oder teilweise in dem Hauptseitenanschlag angeordnet oder vorgesehen oder beides sein.

Es ist auch möglich, dass die Werkzeugführung ganz oder teilweise an dem Tragkörper vorgesehen oder angeordnet ist.

Bevorzugt ist es, wenn die Werkzeugführung ausschließlich an einer einzigen Komponente vorhanden ist, insbesondere ausschließlich an dem Hauptseitenanschlag oder ausschließlich an dem Tragkörper. Dadurch sind die führenden Konturen an ein und derselben Komponente vorgesehen und können keine Relativbewegung zueinander durchführen. Das Arbeitswerkzeug führende Führungskonturen der Werkzeugführung sind zweckmäßigerweise feststehend und unverstellbar an dieser einzigen Komponente vorgesehen.

Ein Ausführungsbeispiel kann vorsehen, dass die Werkzeugführung teilweise an dem Tragkörper und teilweise an dem Hauptseitenanschlag angeordnet und vorgesehen ist. So kann beispielsweise ein sich neben der Hauptseitenanschlagfläche erstreckender oder zu der Hauptseitenanschlagfläche führender Führungsabschnitt der Werkzeugführung an dem Hauptseitenanschlag oder der Hauptseitenanschlagfläche vorgesehen sein, während ein von der Hauptseitenanschlagfläche weiter entfernter Führungsabschnitt der Werkzeugführung an dem Tragkörper vorhanden ist. Mithin können also sowohl der Tragkörper als auch der Hauptseitenanschlag oder Hauptseitenanschlagkörper Teilabschnitte der Werkzeugführung bereitstellen.

Beim Tiefenanschlag ist es vorteilhaft, wenn er an der Werkzeugführung oder neben der Werkzeugführung vorgesehen oder angeordnet ist. Es ist weiterhin möglich, dass der Tiefenanschlag einen Bestandteil der Werkzeugführung bildet. Beispielsweise kann die Tiefenanschlagfläche an oder neben dem Führungsabschnitt der Werkzeugführung, der an dem Tragkörper angeordnet ist, vorgesehen sein.

Ein bevorzugtes Ausführungsbeispiel sieht vor, dass die Werkzeugführung bezüglich der Führungslängsachse teleskopierbar ist. Somit kann eine Länge der Werkzeugführung eingestellt werden.

Es ist möglich, dass die Werkzeugführung einen bezüglich des Tragkörpers festen Abschnitt und einen bezüglich der Führungslängsachse verstellbaren Führungsabschnitt aufweist, der insbesondere mit dem Hauptseitenanschlag verbunden oder gekoppelt ist und bezüglich der Führungslängsachse relativ zu dem erstgenannten Führungsabschnitt verstellbar ist.

Weiterhin ist es vorteilhaft, wenn die Werkzeugführung an dem Tragkörper geführt ist oder ein an dem Tragkörper geführtes Führungselement aufweist, beispielsweise eine Führungshülse, ein Führungsrohr oder dergleichen.

Vorzugsweise weist die Führungsschablone, insbesondere die Verstelleinrichtung, eine Fixiereinrichtung, insbesondere eine Klemmeinrichtung und/oder Rasteinrichtung und/oder Verriegelungseinrichtung, zur Fixierung des Hauptseitenanschlags bezüglich des Tragkörpers in zumindest zwei voneinander verschiedenen Hauptseitenanschlag-Abständen zwischen dem Eingreifvorsprung, insbesondere dessen Außenumfang, und der Hauptseitenanschlagfläche auf.

Ferner kann die Werkzeugführung ein Führungselement aufweisen, welches einen Bestandteil der Verstelleinrichtung bildet. Das Führungselement kann beispielsweise bezüglich des Tragkörpers anhand der Fixiereinrichtung in mindestens zwei Stellpositionen, die jeweils einem Hauptseitenanschlag-Abstand entsprechen, fixierbar sein.

Der Tragkörper weist vorzugsweise eine Führungsaufnahme für ein Führungselement, beispielsweise eine Führungshülse, ein Führungsrohr oder dergleichen, der Werkzeugführung auf. Die Führungsaufnahme ist vorzugsweise domartig oder hülsenartig. Beispielsweise ist die Führungsaufnahme an einem Rohrkörper oder Rohrelement vorgesehen. Das Führungselement ist bezüglich der Führungsaufnahme bezüglich der Führungslängsachse vorzugsweise verstellbar gelagert und/oder fixierbar. Die Führungsaufnahme und das Führungselement bilden beispielsweise Bestandteile der Verstelleinrichtung, mit der ein Hauptseitenanschlag-Abstand der Hauptseitenanschlagfläche zu dem Eingreifvorsprung einstellbar oder verstellbar ist.

An oder neben der Führungsaufnahme ist zweckmäßigerweise eine Fixiereinrichtung zum Beispiel eine Klemmeinrichtung, Rasteinrichtung oder dergleichen, zum Fixieren des Führungselements der Werkzeugführung bezüglich der Führungsaufnahme angeordnet. Somit kann das Führungselement in einer oder mehreren Längspositionen bezüglich der Führungsaufnahme fixiert werden, insbesondere zu dem Zweck, den Hauptseitenanschlag-Abstand zwischen der Hauptseitenanschlagfläche und dem Eindringvorsprung zu fixieren.

Der Hauptseitenanschlag ist zweckmäßigerweise an dem Tragkörper durch ein Führungselement, beispielsweise ein Führungsrohr, eine Führungshülse oder dergleichen, der Werkzeugführung bezüglich der Führungslängsachse verstellbar gelagert und/oder fixierbar. Somit bildet das Führungselement einen Bestandteil der Verstelleinrichtung. Es ist allerdings weiterhin zweckmäßig, wenn der Hauptseitenanschlag an dem Tragkörper durch mindestens eine zusätzliche Führungskomponente, beispielsweise den vorher schon erwähnten Anlageschenkel, an dem der Eingreifvorsprung vorgesehen ist, geführt ist. Allgemein gesagt ist es vorteilhaft, wenn der Hauptseitenanschlag unverdrehbar bezüglich der Führungslängsachse an dem Tragkörper geführt ist. Beispielsweise liegt eine Schmalseite oder Stirnseite des Hauptseitenanschlags an dem Nebenseitenanschlag, beispielsweise der Nebenseitenanschlagfläche, über eine Längserstreckung an, um die Verdrehsicherung zu realisieren.

Die Verstelleinrichtung umfasst zweckmäßigerweise eine Fixiereinrichtung, zum Beispiel eine Klemmeinrichtung und/oder Rasteinrichtung, zur Fixierung des Hauptseitenanschlags in zumindest zwei voneinander verschiedenen Relativabständen zwischen dem Außenumfang des Eingreifvorsprungs und der Tiefenanschlagfläche auf. Die Klemmeinrichtung umfasst beispielsweise eine Klemmschraube oder einen Klemmhebel. Die Rasteinrichtung kann beispielsweise ein federndes Rastelement umfassen. Vorteilhaft kann die Fixiereinrichtung aber auch eine Verriegelungseinrichtung oder ein Riegelelement aufweisen.

Bei der Führungsschablone ist es weiterhin zweckmäßig, wenn sie eine Absaugeinrichtung, zum Beispiel einen Absauganschluss, zur Absaugung von bei der Bearbeitung des Werkstücks durch das Arbeitswerkzeug entstehenden Partikel aufweist. Der Absauganschluss ist beispielsweise an dem Tragkörper angeordnet. An den Absauganschluss kann beispielsweise ein Sauggerät, insbesondere ein Werkstattsauger, angeschlossen werden. Der Absauganschluss weist beispielsweise einen Anschlussstutzen für ein Saugrohr oder einen Saugschlauch auf.

Es ist aber auch möglich, dass die Führungsschablone eine aktive Absaugeinrichtung mit einem Saugaggregat und/oder einem Staubsammelbehälter oder Partikelsammelbehälter aufweist.

Ein bevorzugtes Konzept sieht vor, dass die Absaugeinrichtung mindestens eine Einsaugöffnung zum Einsaugen von Partikeln aufweist, die an dem Eingreifvorsprung angeordnet ist. Mindestens eine Einsaugöffnung dieser Art kann auch an einer zur Anlage an der Werkstückhauptseitenfläche oder Werkstücknebenseitenfläche vorgesehenen Anlagefläche oder Anschlagfläche vorgesehen sein, beispielsweise der Nebenseitenanschlagfläche und/oder der Hauptseitenanschlagfläche. Eine Einsaugöffnung am Eingreifvorsprung hat den Vorteil, dass die Führungsschablone, wenn der Eingreifvorsprung in die Nebenseitenausnehmung bereits eingreift, sozusagen an das Werkstück angesaugt werden kann.

Die mindestens eine Einsaugöffnung kann dazu dienen, sozusagen Falschluft einzusagen, nämlich nicht mit Partikeln beladene Luft, um zu verhindern, dass die Führungsschablone beispielsweise von dem Werkstück abhebt oder weggesaugt wird und/oder dass ein zu großer Unterdruck im Bereich des Sauggeräts oder bei dem Sauggerät entsteht.

Die mindestens eine Einsaugöffnung kommuniziert zweckmäßigerweise mit dem bereits genannten Absauganschluss.

Die mindestens eine Einsaugöffnung kann aber auch neben einer zur Anlage an der Werkstückhauptseitenfläche oder Werkstücknebenseitenfläche vorgesehenen Anlagefläche vorgesehen sein. Somit kann über die Einsaugöffnung beispielsweise Staub oder dergleichen anderer Partikel-Schmutz von der Werkstückhauptseitenfläche oder Werkstücknebenseitenfläche sozusagen abgesaugt werden.

Der Hauptseitenanschlagfläche und/oder eine oder die zur Anlage an der Werkstücknebenseitenfläche vorgesehenen Nebenseitenanschlagfläche sind vorzugsweise Planflächen oder weisen eine Plangestalt auf. Es ist auch möglich, dass Anlage-Vorsprünge der Hauptseitenanschlagfläche und/oder der Nebenseitenanschlagfläche Stirnseiten aufweisen, die in einer gemeinsamen, planen Ebene liegen. Die Stirnseiten können dann an einer ebenen oder planen Werkstückfläche anliegen. Eine oder beide der Anschlagflächen können beispielsweise auch eine elastische Gummierung aufweisen oder eine sonstige nachgiebige Beschaffenheit haben.

Weiterhin ist es zweckmäßig, wenn die Werkzeugführung zur Führung des Arbeitswerkzeugs eine Innenumfangskontur aufweist, die eine Führungsquerschnittsfläche begrenzt, die beispielsweise rund oder kreisrund ist oder eine Flachgestalt mit Längsseiten und gegenüber den Längsseiten kürzeren Schmalseiten aufweist. Die Schmalseiten können geradlinig verlaufen oder gerade Seiten sein, aber auch gerundet sein. Bevorzugt entspricht die Innenumfangskontur der Werkzeugführung bei der Flachausgestaltung mit der Flachgestalt der Außenumfangskontur des Eingreifvorsprungs sowohl geometrisch und/oder flächenmäßig.

Die Führungsquerschnittsfläche wird vorzugsweise von der Führungslängsachse rechtwinkelig durchsetzt.

Die Längsachse des Eingreifvorsprungs und die Führungslängsachse verlaufen zweckmäßigerweise rechtwinkelig zueinander.

Der Hauptseitenanschlag umfasst zweckmäßigerweise einen Plattenkörper. An einer dem Werkstück zugewandten oder zugeordneten Seite des Hauptseitenanschlags oder des Plattenkörpers ist zweckmäßigerweise die Hauptseitenanschlagfläche vorgesehen.

Der Hauptseitenanschlag wird zweckmäßigerweise von einem Führungselement der Werkzeugführung durchsetzt oder weist ein Führungselement der Werkzeugführung auf.

Das oder ein Führungselement der Werkzeugführung steht zweckmäßigerweise in Richtung des Tragkörpers vor den Hauptseitenanschlag vor.

Nachfolgend wird ein Ausführungsbeispiel der Erfindung anhand der Zeichnung erläutert. Es zeigen:
- Figur 1: eine perspektivische Schrägansicht der Führungsschablone sowie einer Hand-Werkzeugmaschine zum Antreiben eines Arbeitswerkzeugs sowie einem Staubsauger,
- Figur 2: eine perspektivische Schrägansicht einer Hand-Werkzeugmaschine zur Herstellung einer Nebenseitenausnehmung,
- Figur 3: eine Seitenansicht der Führungsschablone gemäß Figur 1 im Eingriff mit einem Werkstück in einer ersten Einstellposition der Hauptseitenanschlagfläche,
- Figur 4: die Anordnung gemäß Figur 3, jedoch mit der Hauptseitenanschlagfläche in einer zweiten Einstellposition,

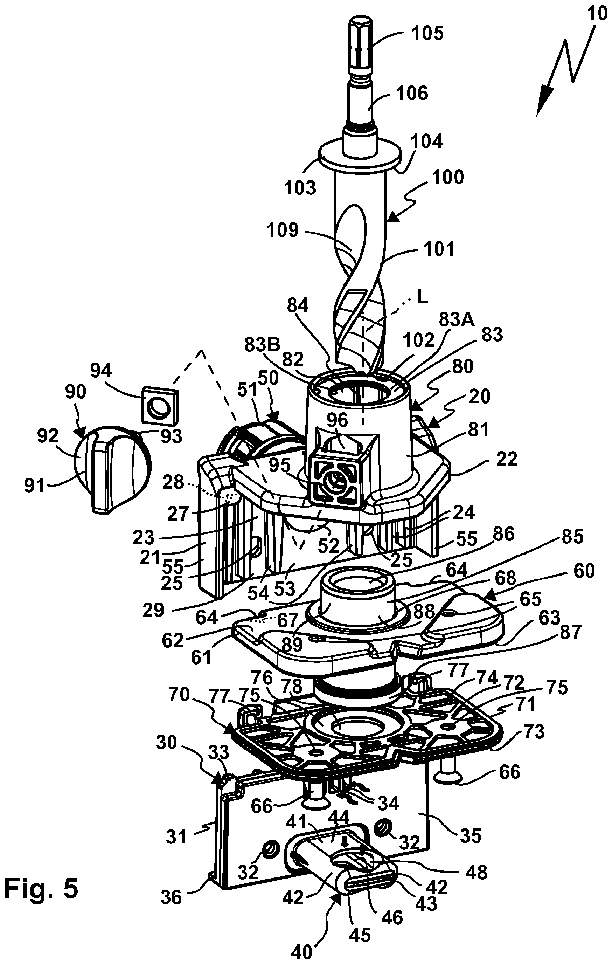

- Figur 5: eine Explosionsdarstellung der Führungsschablone gemäß vorstehender Figuren,
- Figur 6: eine perspektivische Schrägansicht der Führungsschablone gemäß vorstehender Figuren von der Seite ihres Absauganschlusses her,
- Figur 7: einen Hauptseitenanschlag der Führungsschablone gemäß Figur 6,
- Figur 8: eine Variante der Führungsschablone gemäß Figur 6 mit einem einstellbaren Tiefenanschlag,
- Figur 9: einen Beschlag, der in eine mit der Führungsschablone herstellbare Hauptseitenausnehmung einsetzbar ist, in perspektivischer Darstellung,
- Figur 10: eine Querschnittsansicht durch das Werkstück gemäß Figur 3, welches mit einem weiteren Werkstück anhand des Beschlags gemäß Figur 9 verbunden ist, und
- Figur 11: eine Draufsicht auf ein Führungselement einer Werkzeugführung mit einer Führungskontur oder Innenumfangskontur, die eine Flachgestalt aufweist.

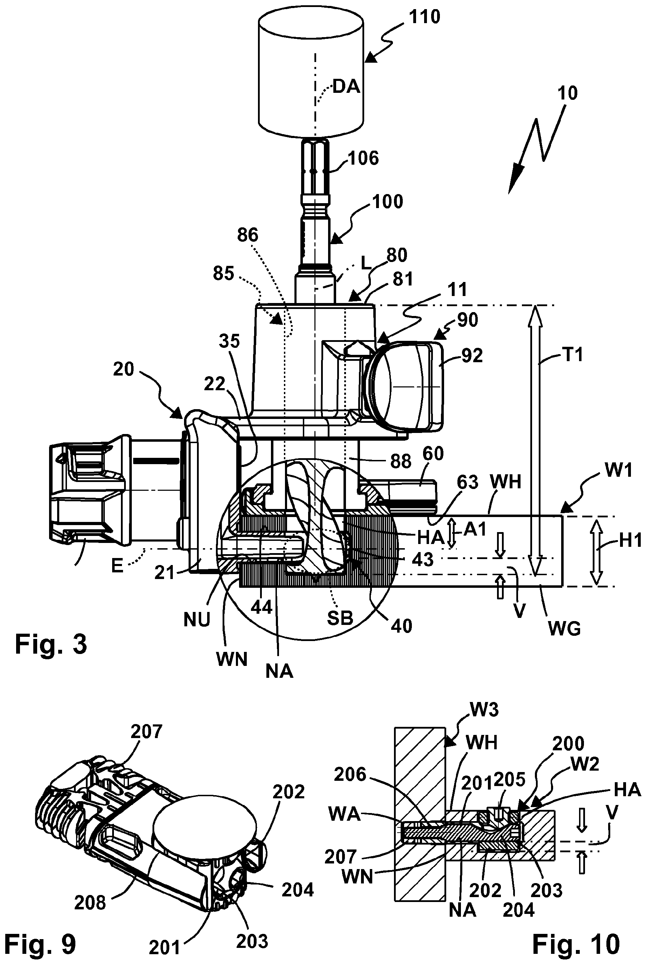

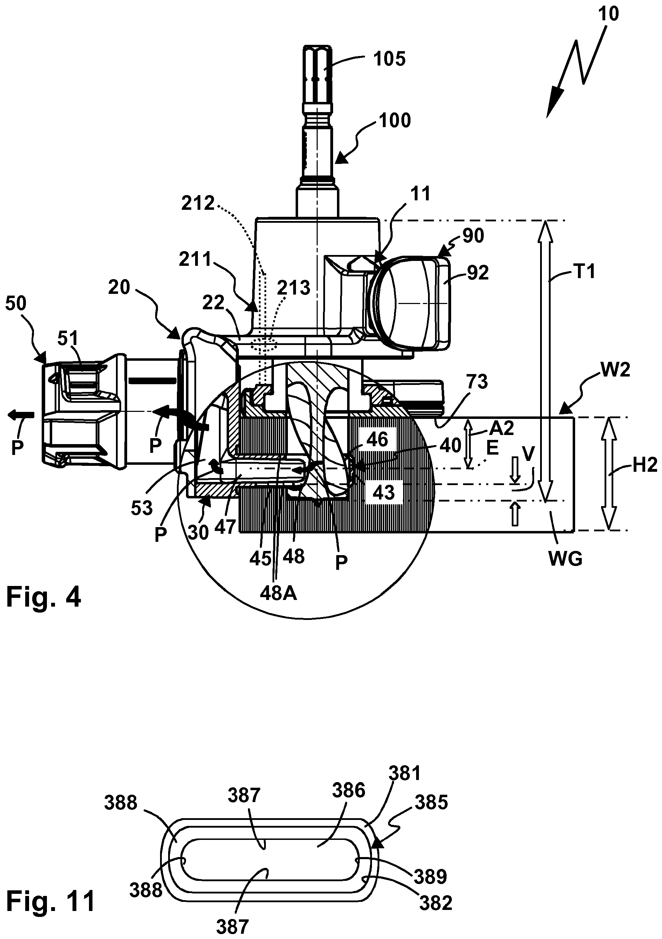

Eine Führungsschablone 10 dient zur Herstellung einer Hauptseitenausnehmung HA in einem Werkstück W, welches bereits eine Nebenseitenausnehmung NA aufweist. Die Nebenseitenausnehmung NA erstreckt sich von einer Werkstücknebenseitenfläche WN parallel zu einer Werkstückhauptseitenfläche WH, beispielsweise einer Werkstückoberfläche oder Oberseite des Werkstücks W. Der Werkstückhauptseitenfläche WH entgegengesetzt weist das Werkstück W eine Werkstückgrundseite WG auf, beispielsweise eine Unterseite. In den Figuren 3 und 4 wird deutlich, dass mit der Führungsschablone 10 unterschiedliche Werkstücke W1 und W2 zu bearbeiten sind, die unterschiedliche Werkstückhöhen H1 und H2 aufweisen, also unterschiedliche Abstände zwischen der Werkstückhauptseitenfläche WH und der Werkstückgrundseite WG.

Die Werkstückhauptseitenfläche WH und die Werkstücknebenseitenfläche WN sind winkelig zueinander, beispielsweise rechtwinkelig. Die Werkstückhauptseitenfläche WH und die Werkstücknebenseitenfläche WN grenzen an einer Werkstückkante aneinander.

Die unterschiedlichen Werkstückhöhen H1 und H2 führen beispielsweise dann, wenn wie bei den Werkstücken W1 und W2 (Figuren 3, 4) die Nebenseitenausnehmung NA jeweils etwa mittig zwischen der Werkstückhauptseitenfläche WH und der Werkstückgrundseite WG eingebracht wird, dass der Abstand zwischen der jeweiligen Nebenseitenausnehmung NA und der Werkstückhauptseitenfläche WH unterschiedlich groß ist. Dennoch soll die Hauptseitenausnehmung HA nicht nur mit gleichen Winkelverhältnissen, beispielsweise im rechten Winkel, zu der Nebenseitenausnehmung NA hergestellt werden, sondern auch mit einer derartigen Länge, dass ein Schnittbereich SB, in dem sich die Hauptseitenausnehmung HA und die Nebenseitenausnehmung NA schneiden, geometrisch gleich ausgestaltet ist. Insbesondere ist angestrebt, dass ein Überstand V, mit dem die Hauptseitenausnehmung HA an der von der Werkstückhauptseitenfläche WH abgewandten Seite über die Nebenseitenausnehmung NA vorsteht, jeweils gleich bleibt. Dadurch ist es möglich, einen Beschlag 200 in die Werkstückausnehmungen HA und die Nebenseitenausnehmung NA einzusetzen. Der Beschlag 200 umfasst beispielsweise ein Beschlagelement 201, welches in die Nebenseitenausnehmung NA einzustecken ist. Dabei gelangt das Beschlagelement 201 in Eingriff mit einem zweiten Beschlagelement 202, welches in die Hauptseitenausnehmung HA eingesteckt ist.

Das Beschlagelement 201 ist zudem durch den Stützkörper 208 abgestützt, welcher eine flach rechteckige Außenumfangskontur aufweist und formschlüssig in der Nebenseitenausnehmung NA aufgenommen ist.

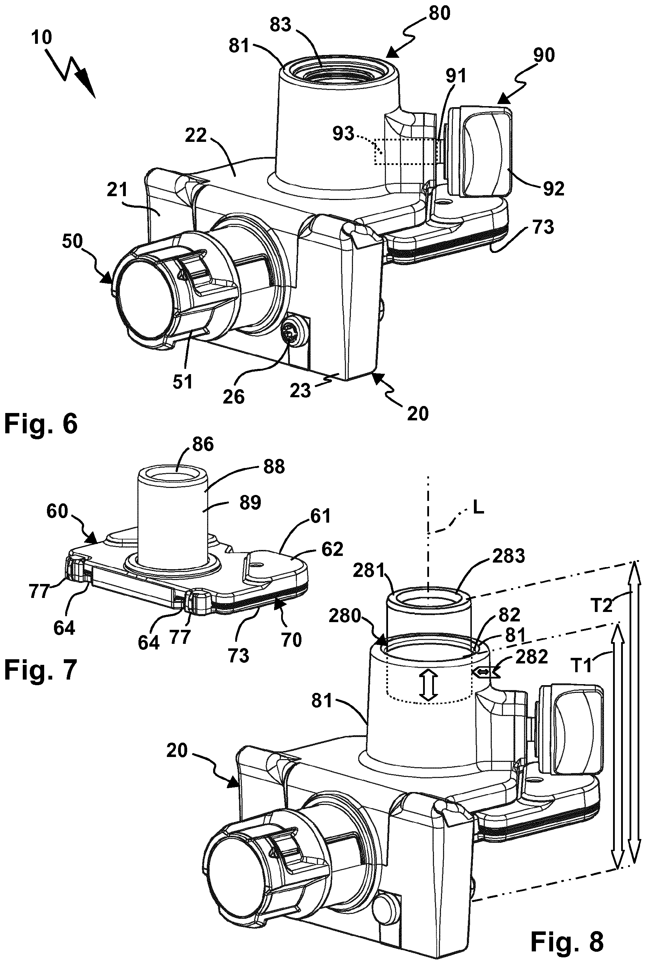

Das Beschlagelement 202 weist eine Steckaufnahme 203 auf, in die ein Steckende 204 des Beschlagelements 201 einzustecken ist und der mit einem Klemmelement 205, des Beschlagelements 202 zu verklemmen ist. Man erkennt in Figur 8, dass das Beschlagelement 202 vor das andere Beschlagelement 201 an der vom Klemmelement 205 oder der Werkstückhauptseitenfläche WH abgewandten Seite vor das Beschlagelement 201 vorsteht, weshalb der Überstand V möglichst exakt und in zumindest einer vorbestimmten Länge vorhanden sein soll.

Das Beschlagelement 201 kann mit seinem vom Beschlagelement 202 abgewandten Längsende 206 mit einem dritten Beschlagelement 207 verbunden sein oder weist das Beschlagelement 207 auf, welches beispielsweise in das Werkstück W3 eingesteckt ist, nämlich in eine Werkstückaufnahme WA.

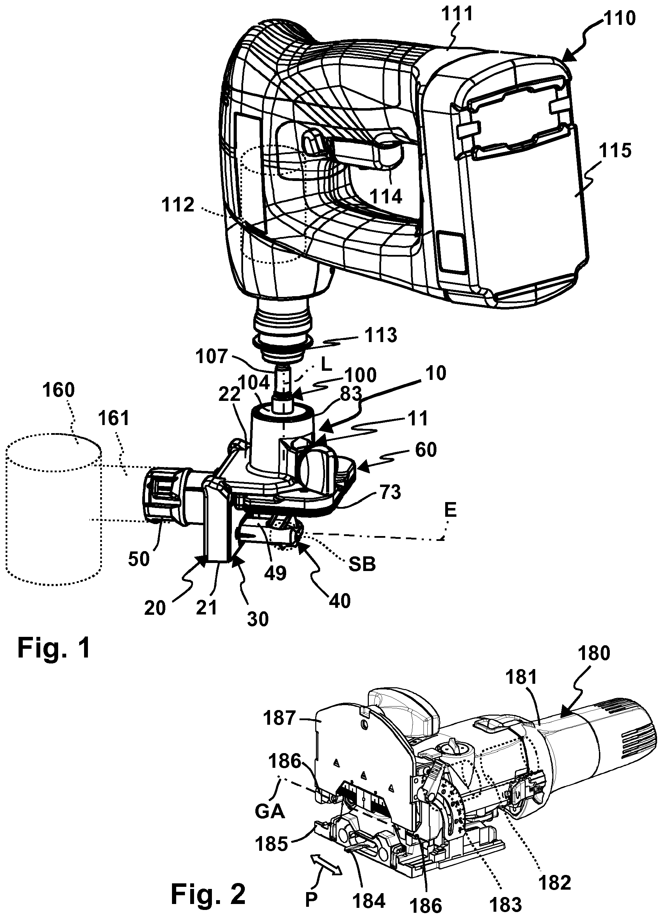

Die Werkstückaufnahme WA weist die gleiche etwa flach rechteckige Gestalt mit gerundeten Schmalseiten wie die Nebenseitenausnehmung NA auf und ist beispielsweise anhand des in Figur 2 dargestellten Geräts, nämlich einer Fräsmaschine 180 herstellbar. Die Fräsmaschine 180 weist ein Gehäuse 181 auf, in welchem ein Antriebsmotor 182 sowie ein Getriebe 182 angeordnet sind, welches vom Antriebsmotor 182 angetrieben wird. Das Getriebe 183 weist zum einen einen Drehabtrieb für ein Fräswerkzeug 184 der Fräsmaschine 180 auf, zum anderen aber auch ein Pendelgetriebe derart, dass das Fräswerkzeug 184 eine Pendelbewegung P durchführt, so dass mit der Fräsmaschine 180 ein Langloch oder eine flach rechteckige Werkstückausnehmung, beispielsweise die Werkstückausnehmung WA oder die Nebenseitenausnehmung NA, herstellbar ist.

Dabei wird die Fräsmaschine 180 zweckmäßigerweise mit ihrem Frontalanschlag 185, vor den das Fräswerkzeug 184 vorsteht, beispielsweise an die Werkstücknebenseitenfläche WN angelegt, so dass das Fräswerkzeug 184 in das Werkstück W1, W2 oder W3 eingreifen kann. Dabei ist zusätzlich noch ein Höhenanschlag möglich, beispielsweise indem ein Winkelanschlag 187 um eine Schwenkachse GA anhand von Schwenklagern 186 geschwenkt wird, so dass der Winkelanschlag 187 bzw. dessen Anschlagfläche eine Winkelstellung zum Frontalanschlag 185 bzw. dessen Anschlagfläche, einnimmt, beispielsweise einen rechten Winkel. Der Winkelanschlag 187 kann beispielsweise an die Werkstückgrundseite WG oder die Werkstückhauptseitenfläche WH angelegt werden, um die Nebenseitenausnehmung NA in das jeweilige Werkstück W1, W2 einzubringen.

Die durch die Fräsmaschine 180 erzielbare Genauigkeit bei der Herstellung der Nebenseitenausnehmung NA und/oder der Werkstückaufnahme WA ist jedoch auch bei der Herstellung bei der Hauptseitenausnehmung HA angestrebt, wofür die Führungsschablone 10 nützlich ist.

Die Führungsschablone 10 weist eine Werkzeugführung 85 zur Führung eines Arbeitswerkzeugs 100 auf, beispielsweise eines Bohrwerkzeugs 107.

Das Arbeitswerkzeug 100 weist einen Schneideabschnitt 101 mit einer stirnseitigen Schneide 108 auf, mit der in die Werkstückhauptseifenfläche WH eingebohrt oder eingeschnitten werden kann. Von der Stirnseite 102 mit der Schneide 108 oder den Schneiden 108 erstreckt sich mindestens ein spiraliger Spanförderkanal 109 in Richtung eines Schafts 106 des Arbeitswerkzeugs 100, welches zur Verbindung mit einer Hand-Werkzeugmaschine 110 dient.

Die Hand-Werkzeugmaschine 110 ist beispielsweise ein Bohrgerät oder Schraubgerät mit einem Gehäuse 111, in welchem ein Antriebsmotor 112, also ein Drehantrieb, angeordnet ist. Der Antriebsmotor 112 treibt direkt über ein nicht dargestelltes Getriebe eine Werkzeugaufnahme 113 an und ist über einen Antriebsschalter 114 einschaltbar und ausschaltbar. Die Hand-Werkzeugmaschine 110 könnte eine netzgebundene Hand-Werkzeugmaschine sein, die beispielsweise mit einem Anschlusskabel an einem Energieversorgungsnetz von insbesondere 120 V oder 230 V Wechselstrom anschließbar ist. Vorliegend ist jedoch ein Energiespeicher 115, beispielsweise ein Akkupack, zur Versorgung der Hand-Werkzeugmaschine 110 vorgesehen. Der Antriebsmotor 112 treibt die Werkzeugaufnahme 113 um eine Drehachse DA an.

Das Arbeitswerkzeug 100 weist an seinem Schaft 106 beispielsweise Mitnahmekonturen 105, insbesondere einen Sechskant, auf, der in formschlüssigen oder drehschlüssigen Eingriff mit der Werkzeugaufnahme 113 bringbar ist. Alternativ wäre auch ein runder Schaft 106 möglich, der mit einem Bohrfutter verklemmbar ist.

Zwischen dem Schaft 106 und dem Schneideabschnitt 105 ist ein Flansch 103 vorgesehen, der einen Gegenanschlag 104 zum Anschlagen an einem Tiefenanschlag 80 der Führungsschablone 10 aufweist.

Der Tiefenanschlag 80 ist an einem Tragkörper 20 der Führungsschablone 10 angeordnet.

Der Tragkörper 20 ist ein Winkelkörper und umfasst einen Anlageschenkel 21, der der Werkstücknebenseitenfläche WN zugeordnet ist, sowie einen Tragschenkel 22, der winkelig, insbesondere rechtwinkelig, zum Anlageschenkel 21 angeordnet ist und den Tiefenanschlag 80 trägt.

Ein Wandkörper 23 des Anlageschenkels 21 könnte beispielsweise direkt zur Anlage an der Werkstücknebenseitenfläche WN ausgestaltet oder ausgebildet sein. In diesem Fall wären anstelle von Stützrippen 24, die an einer dem Tragschenkel 22 zugewandten Seite 29 des Wandkörpers 23 vorgesehen sind, beispielsweise so ausgestaltet, dass sie insgesamt eine Planfläche definieren bzw. ihre Stirnseitenflächen oder Frontseitenflächen in einer gemeinsamen, planen Ebene liegen, so dass sie an der flachen und planen Werkstücknebenseitenfläche WN unmittelbar anliegen können. Mithin würde also der Anlageschenkel 21 in diesem Fall direkt einen Nebenseitenanschlag bilden.

Vorliegend ist jedoch zur Bereitstellung einer Nebenseitenanschlagfläche 35 ein separater Körper, nachfolgend als Nebenseitenanschlag 30 bezeichnet, vorgesehen.

Der Nebenseitenanschlag 30 weist einen Wandkörper 31 auf, der mit dem Anlageschenkel 21 verbunden ist, beispielsweise verklebt und/oder verschraubt und/oder verrastet.

Für eine Verschraubung hat der Anlageschenkel 21 Schrauböffnungen 25, die mit Schrauböffnungen 32 des Wandkörpers 31 fluchten und zum Einschrauben von Schrauben 26 dienen, insbesondere von der von dem Wandkörper 31 abgewandten Seite des Anlageschenkels 21 her.

Zudem kann der Wandkörper 31 formschlüssig am Tragkörper 20 gehalten sein, beispielsweise indem Montagevorsprünge oder Steckvorsprünge 33 in Steckaufnahmen 28 des Anlageschenkels 21 eingreifen. Die Steckvorsprünge 33 sind beispielsweise in Eckbereichen oder an Eckbereichen des Wandkörpers 23 angeordnet. Die Steckaufnahmen 28 befinden sich in der Nähe des Tragschenkels 22, beispielsweise in einem Inneneck-Bereich zwischen dem Anlageschenkel 21 und dem Tragschenkel 22. Dort sind beispielsweise Vorsprünge 27 vorgesehen, die in Richtung der Stützrippen 24 vorstehen und hinter denen die Steckaufnahmen 28 vorgesehen sind.

Der Nebenseitenanschlag 30 weist die Nebenseitenanschlagfläche 35 auf, die zur Anlage an der Werkstücknebenseitenfläche WN vorgesehen und ausgestaltet ist. Die Nebenseitenanschlagfläche 35 ist ebenso wie eine zur Anlage an der Werkstückhauptseitenfläche WH vorgesehene Hauptseitenanschlagfläche 73 eine Planfläche.

Im Bereich der Nebenseitenanschlagfläche 35 sind Einsaugöffnungen 34 vorgesehen, die mit einem Absauganschluss 51 einer Absaugeinrichtung 50 der Führungsschablone 10 in Strömungsverbindung stehen.

Eine weitere Abstützung erfährt der Nebenseitenanschlag 30 bzw. der Wandkörper 31 an dem Anlageschenkel 21 durch einen Seitenschenkel 36, der an einer von der Nebenseitenanschlagfläche 35 abgewandten oder zu der Nebenseitenanschlagfläche 35 entgegengesetzten Seite zu dem Anlageschenkel 21 vorsteht und beispielsweise neben den Stützrippen 24 an dem Wandkörper 23 stirnseitig anliegt. Der Seitenschenkel 36 und die Steckvorsprünge 33 sind aneinander entgegengesetzten Seiten oder aneinander entgegengesetzten Kantenbereichen des Nebenseitenanschlags 30 des Wandkörpers 31 angeordnet.

An dem Nebenseitenanschlag 30 ist ein Eingreifvorsprung 40 vorgesehen, der vor die Nebenseitenanschlagfläche 35 vorsteht. Der Eingreifvorsprung 40 dient zum Eingriff in die Nebenseitenausnehmung NA. Der Eingreifvorsprung 40 weist eine zu der Nebenseitenausnehmung NA passende Flachgestalt mit Flachseiten 41 sowie nach außen gerundeten Schmalseiten 42 auf. Die Schmalseiten 42 sowie die Flachseiten 41 definieren einen Außenumfang 49 des Eingreifvorsprungs 40, dessen Kontur im Wesentlichen dem Innenumfang oder der Innenumfangskontur der Nebenseitenausnehmung NA entspricht. Dementsprechend kann der Eingreifvorsprung 40 im Wesentlichen formschlüssig in die Nebenseitenausnehmung NA eingreifen und sich dort abstützen. Im Ergebnis führt dies dazu, dass der Nebenseiten-Eingreifvorsprung 40 sozusagen eine Ausrichtung der Führungsschablone 10 bezüglich des Werkstücks W1, W2 leistet. Zugleich liegt die Nebenseitenanschlagfläche 35 an der Werkstücknebenseitenfläche WN an, so dass dadurch eine Relativposition einer Werkzeugführung 85 der Führungsschablone 10 bezüglich der Nebenseitenausnehmung NA definiert ist. Alternativ zu der Anlage der Nebenseitenanschlagfläche 35 an der Werkstücknebenseitenfläche WN oder ergänzend dazu ist es auch möglich, dass eine Stirnseite 43 des Eingreifvorsprungs 40 an einem Boden oder sonstigen ihm stirnseitig gegenüberliegenden Fläche anschlägt, wenn der Eingreifvorsprung 40 in die Nebenseitenausnehmung NA eingreift.

Vorteilhaft ist es, wenn eine der Hauptseitenanschlagfläche 73 zugewandte Oberseite und/oder eine der zu der Oberseite 44 entgegengesetzte Unterseite 45, also mindestens eine oder beide Flachseiten 41, an den zugeordneten Flachseiten der Nebenseitenausnehmung NS anliegen.

Insbesondere zweckmäßig ist es, wenn eine von der Hauptseitenanschlagfläche 73 abgewandte Seite des Eingreifvorsprungs 40, zum Beispiel die Unterseite 45, zur Anlage an einer ihr zugeordneten Flachseite NU der Nebenseitenausnehmung NS vorgesehen oder angeordnet ist. Mithin stützt sich also die Führungsschablone 10 zweckmäßigerweise mit der Unterseite 45 oder in allgemeiner Formulierung mit einer von der Hauptseitenanschlagfläche abgewandten Seite des Eingreifvorsprungs 40 an dem Werkstück W, nämlich dessen Nebenseitenausnehmung NS, ab.

Zweckmäßig ist weiterhin, wenn an dem Eingreifvorsprung 40 eine Einsaugöffnung 46 vorgesehen ist, die mit der Absaugeinrichtung 40 strömungsverbunden ist, insbesondere dem Absauganschluss. Somit können bei der Herstellung der Hauptseitenausnehmung HA anhand des Arbeitswerkzeugs 100 anfallende Späne oder sonstige Partikel direkt aus der herzustellenden Bohrung, nämlich der Hauptseitenausnehmung HA, abgesaugt werden.

Im Innern des Eingreifvorsprungs 40 verläuft ein Strömungskanal 47, der mit der Einsaugöffnung 46 sowie mit dem Absauganschluss 51 kommuniziert.

Weiterhin kommuniziert der Absauganschluss 51 strömungstechnisch mit einer Einsaugöffnung 52, die beispielsweise zwischen Rippen 43 der Stützrippen 24 verläuft. Mithin ist also der Wandkörper 41 in einem Abstand zu der Seitenfläche der Seite 29 des Anlageschenkels 21 angeordnet, so dass zwischen dem Wandkörper 21 und dem Wandkörper 23 einer oder mehrere Strömungskanäle bzw. Strömungsverbindungen zwischen einerseits den Einsaugöffnungen 46, 52 und andererseits dem Absauganschluss 51 verlaufen.

Der Wandkörper 23 des Anlageschenkels 21 weist weiterhin Seitenschenkel 55 auf, die zum Wandkörper 31 des Nebenseitenanschlags 30 vorstehen, so dass dadurch die Strömungskanäle bzw. Strömungskammern, die zwischen dem Wandkörper 23 und dem Wandkörper 31 vorhanden sind, sozusagen seitlich abgedichtet oder verschlossen sind.

Wenn an den Absauganschluss 51 beispielsweise ein Absaugkanalelement oder Saugschlauch 161 eines Sauggeräts 160 angeschlossen ist, ist eine Strömungsverbindung zwischen den Einsaugöffnungen 46, 52 und dem Sauggerät 160 hergestellt, durch die dann, wenn ein Saugaggregat des Sauggeräts 160 betrieben wird, ein Partikelstrom P strömen kann, siehe dazu insbesondere die schematische Darstellung in Figur 4. Die Einsaugöffnungen 46, die nahe bei dem nachfolgend noch näher beschriebenen Hauptseitenanschlag 60, insbesondere dessen Hauptseitenanschlagfläche 73, verlaufen, sorgen dafür, dass ein Zwischenraum zwischen der Hauptseitenanschlagfläche 73 des Hauptseitenanschlags 60 und der Werkstückhauptseitenfläche WH effektiv abgesaugt wird. Wenn also das Arbeitswerkzeug 100 Späne, Staub oder sonstige Partikel bei der Bearbeitung des Werkstücks W1, W2 erzeugt, werden diese sowohl von der Werkstückhauptseitenfläche WH als auch aus der Hauptseitenausnehmung HA effektiv abgesaugt.

Der Hauptseitenanschlag 60 weist einen Anschlagkörper 61 auf, dessen Oberseite 62 dem Tragschenkel 22 zugeordnet oder zugewandt ist, und an dessen vom Tragschenkel 22 abgewandten Anlageseite 63 ein Anlagekörper 40 zur Anlage an dem Werkstück W1, W2, nämlich der Werkstückhauptseitenfläche WH, vorgesehen ist. Der Anschlagkörper 61 ist insbesondere plattenförmig oder als Platte ausgestaltet.

Der Anschlagkörper 62 ist verdrehsicher am Tragkörper 20 geführt. Beispielsweise hat er Verdrehsicherungskonturen 64 an seiner dem Anlageschenkel 21 zugewandten Schmalseite und/oder liegt seine Schmalseite über einen Längsbereich an der Nebenseitenanschlagfläche 35 an.

Der Anlagekörper 70 ist an dem Anschlagkörper 61 formschlüssig abgestützt. Der Anlagekörper 70 weist beispielsweise einen Plattenkörper 71 auf, dessen dem Anlageschenkel 21 zugewandte Seite die Hauptseitenanschlagfläche 73 bereitstellt. Die von der Hauptseitenanschlagfläche 73 abgewandte Stützseite 72 des Plattenkörpers 71 oder Anlagekörpers 70 liegt an der Anlageseite 63 des Hauptseitenanschlags 60 oder Anschlagskörpers 61 an. Vorzugsweise sind Rippen 74 oder eine Rippenstruktur an der Stützseite 72 angeordnet, so dass der Plattenkörper 71 über diese Rippenstruktur oder Rippen 74 an der Anlageseite 63 abgestützt ist.

Bevorzugt ist der Anschlagkörper 61 des Hauptseitenanschlags 60 aus einem festeren Material als der Anlagekörper 70, beispielsweise aus einem entsprechend harten Kunststoff oder aus Metall. Der Anlagekörper 70 hingegen ist vorzugsweise elastisch nachgiebig, so dass er ohne die Werkstückhauptseitenfläche WH zu beschädigen an dieser anliegen kann.

Selbstverständlich ist es auch bei der Nebenseitenanschlagfläche 65 vorteilhaft, wenn sie nachgiebig oder elastisch ist und/oder aus einem nachgiebigen, beispielsweise elastischen, Kunststoffmaterial, Gummi oder dergleichen besteht.

Mithin ist es also vorteilhaft, wenn sowohl der Nebenseitenanschlag 30 als auch der Anlagekörper 70 des Hauptseitenanschlags 60 oder deren jeweilige Anschlagfläche elastisch sind, beispielsweise aus Gummi oder einem federnd nachgiebigen Kunststoffmaterial.

Vor dem Plattenkörper 71 stehen Rastvorsprünge oder Hakenvorsprünge 77 vor, die zum Eingriff in Rastaufnahmen oder Hakenaufnahmen 67 im Bereich der Verdrehsicherungskonturen 64 oder der Eckbereiche des Anschlagkörpers 61 vorgesehen sind. Mithin kann also der Anlagekörper 70 mit dem Anschlagkörper 61 verhakt sein oder werden.

Ein weiterer Halt des Anlagekörpers 70 am Hauptseitenanschlag 60 oder Anschlagkörper 61 ist durch eine Verschraubung gegeben. So sind beispielsweise Schrauben 66 durch Schraubaufnahmen 75 des Anlagekörpers 70 durchgesteckt und in Schraubaufnahmen 65 des Anschlagkörpers 61 eingeschraubt.

An dem Hauptseitenanschlag 60 ist ein Führungselement 88 der Werkzeugführung 85 fixiert. Das Führungselement 85 weist beispielsweise einen Rohrkörper 89 auf. Eine Innenumfangskontur 86 des Rohrkörpers 89 oder des Führungselements 88 ist vorliegend kreisförmig oder kreisrund, passend zum entsprechend kreisrunden Außenumfang des Schneidwerkzeugs oder Arbeitswerkzeugs 100. Somit kann das Arbeitswerkzeug 100 entlang einer Führungslängsachse L in dem Führungselement 88 und somit der Werkzeugführung 85 längsschieblich geführt sein.

Vorzugsweise ist das Führungselement 88 mit dem Hauptseitenanschlag 60 oder dem Anschlagkörper 61 fest verbunden und/oder einstückig.

Das Führungselement 88 ist beispielsweise in eine Aufnahme 68 des Hauptseitenanschlags 60 oder Anschlagskörpers 61 eingesteckt, insbesondere eingepresst.

Ein Flanschvorsprung oder Haltevorsprung 87 des Rohrkörpers 89 oder Führungselements 88 stützt sich zweckmäßigerweise an einer Stützfläche 76 des Anlagekörpers 70 ab. Die Stützfläche 76 ist ringförmig und erstreckt sich um eine Durchtrittsöffnung 78, die mit der Aufnahme 68 koaxial ist. Der Durchtrittsquerschnitt der Durchtrittsöffnung 78 entspricht mindestens dem Querschnitt oder Führungsquerschnitt des Führungselements 88, so dass das Arbeitswerkzeug 100 auch die Durchtrittsöffnung 78 durchdringen kann.

Der Haltvorsprung 87 oder Flansch ist sandwichartig zwischen dem Anlagekörper 70 und dem Anschlagkörper 61 gehalten, siehe zum Beispiel Figuren 3 und 4.

Ein von der Hauptseitenanschlagfläche 73 abgewandter Abschnitt des Führungselements 88 taucht in einen Führungskörper 81 ein, der an dem Tragkörper 20 vorgesehen ist. Beispielsweise weist der Führungskörper 81 eine Führungsaufnahme 82 auf, an deren Innenkontur die Außenkontur des Führungselements 88 direkt oder vorzugsweise über Stützrippen 84 oder Führungsrippen geführt ist.

Der Führungskörper 81 steht an einer von dem Hauptseitenanschlag 80 abgewandten Seite des Tragschenkels 22 vor diesen vor. Beispielsweise ist der Führungskörper 81 hülsenartig oder domartig. Man könnte den Führungskörper 81 auch als Führungshülse bezeichnen.

An einem freien, vom Tragkörper 20 abgewandten Endbereich des Führungskörpers 81 steht ein Anschlag nach radial innen in die Führungsaufnahme 82 vor. Dieser Anschlag kann einen Anschlag für das Führungselement 88 bilden. Die Hauptfunktion ist jedoch, eine Tiefenanschlagfläche 83 an der von dem Hauptseitenanschlag 60 abgewandten Seite des Führungskörpers 81 bereitzustellen, an dem der Gegenanschlag 104 des Arbeitswerkzeugs 100 anschlagen kann.

Da der Eingreifvorsprung 40 und die Tiefenanschlagfläche 84 eine feste, unverstellbare Relation zueinander haben (Figuren 3 und 4), ist die Eindringtiefe des Arbeitswerkzeugs 100 in das Werkstück W1, W2 stets gleich. Beispielsweise ist ein Tiefeneinstell-Abstand T1 zwischen der Tiefenanschlagfläche 83 und dem über dem Eingreifvorsprung 40 vorstehenden Endbereich des Überstands V vorgegeben.

An dem Eingreifvorsprung 40 ist eine Aussparung 48, insbesondere eine Durchtrittsöffnung, für das Arbeitswerkzeug 100 vorhanden. Das Arbeitswerkzeug 100 kann in Eingreifvorsprung 40 an der Aussparung 48 durchdringen und so beispielsweise die Hauptseitenausnehmung HA mit dem Überstands V herstellen. Dabei ist es insbesondere vorteilhaft, dass der Eingreifvorsprung 40 an einer oder mehreren Umfangsbereichen der Aussparung 48 an dem Werkstück W, d. h. in der Nebenseitenausnehmung NA, flächig anliegt, beispielsweise mit Anlageflächen 48A, die an mindestens einer der Flachseiten 41, insbesondere der unter Seite 45, des Eingreifvorsprungs 40 vorgesehen sind. Dadurch reist das Werkstück W im Bereich der herzustellenden Hauptseitenausnehmung HA nicht oder weniger aus. Beispielsweise lösen sich keine oder weniger Holzsplitter aus dem Grundmaterial des Werkstücks W

Möglich ist es, dass ein Außenumfang des Arbeitswerkzeugs 100, beispielsweise nahe beim Gegenanschlag 104, durch den Innenumfang 83B des Anschlags 83A, in dem die Tiefenanschlagfläche 83 vorgesehen ist, andererseits auch durch die Innenumfangskontur 86 des Führungselements 88 geführt ist. Dann ist das Arbeitswerkzeug 100 bezüglich der Führungslängsachse L in an zueinander beabstandeten Bereichen durch die Werkzeugführung 85 geführt.

Zur Vermeidung oder Verringerung einer Verspannung ist es aber vorteilhaft, wenn der Innenumfang 83B des Anschlags 83A einen größeren Querschnitt als die Innenumfangskontur 86 des Führungselements 88 aufweist, sodass das Arbeitswerkzeug 100 an seinem Außenumfang lediglich und/oder ausschließlich durch die Innenumfangskontur 86 des Führungselements 88 und ohne Kontakt mit dem Innenumfang 83B des Anschlags 83A geführt ist.

Die Werkzeugführung 85 bildet gleichzeitig einen Bestandteil der eine Verstelleinrichtung 11, mit der ein Hauptseitenanschlag-Abstand A1 oder A2 oder weitere, in der Zeichnung nicht dargestellte Hauptseitenanschlag-Abstände, zwischen dem Eingreifvorsprung 40 und der Hauptseitenanschlagfläche 73 einstellbar sind. Der Hauptseitenanschlag-Abstand A1 oder A2 ist beispielsweise der Abstand zwischen der Längsachse E des Eingreifvorsprungs 40 oder der Mittelachse des Eingreifvorsprungs 40 und der Hauptseitenanschlagfläche 73. Der Hauptseitenanschlag-Abstand A1 oder A2 könnte aber auch ohne weiteres beispielsweise der Abstand zwischen der Hauptseitenanschlagfläche 73 und einer ihr gegenüberliegenden Fläche des Außenumfangs des Eingreifvorsprungs 40, zum Beispiel einer Flachseite 41 des Eingreifvorsprungs 40, beispielsweise der Oberseite 44, definiert sein. Mithin ist also ein Relativabstand zwischen der Hauptseitenanschlagfläche 73 und dem Eingreifvorsprung 40 anhand der Verstelleinrichtung 11 einstellbar.

Die Führungsaufnahme 82 bildet eine Linearlageraufnahme oder Schiebelageraufnahme für ein Lagerelement der Verstelleinrichtung 11 und/oder der Werkzeugführung 85. So bildet beispielsweise das Führungselement 88 der Werkzeugführung 85 ein derartiges Lagerelement.

Das Lagerelement oder Führungselement 88 ist koaxial zur Führungslängsachse L an der Führungsaufnahme 82 bzw. am Führungskörper 81 verschieblich gelagert.

Somit sind die Hauptseitenanschlag-Abstände, beispielsweise A1 oder A2 oder weitere Abstände, insbesondere stufenlos, einstellbar.

Zur jeweiligen Fixierung der Verstelleinrichtung 11 in diesen Hauptseitenanschlag-Abständen, z.B. A1 und A2, dient eine Fixiereinrichtung 90. Die Fixiereinrichtung 90 umfasst beispielsweise einen Klemmkörper 91, insbesondere eine Klemmschraube oder dergleichen. Der Klemmkörper 91 ist anhand eines manuell betätigbaren Bedienelements 92, beispielsweise einem Bedienknauf oder dergleichen, betätigbar. Ein Schraubabschnitt 93 ist an eine Mutter 94 einschraubbar, welche in einer Halterung 96 am Führungskörper 81 gehalten ist. Koaxial mit der Schrauböffnung der Mutter 94 ist eine Durchtrittsöffnung 95 am Führungskörper 81 vorgesehen, die vom Schraubabschnitt 93 durchdrungen ist, so dass dieser mit seinem Kopf gegen das Führungselement 88 in einen klemmenden Eingriff gebracht werden kann.

Selbstverständlich wäre anstelle einer Verklemmung auch eine Verrastung oder sonstige Längsfestlegung des Führungselements 88 bezüglich des Führungskörpers 81 möglich, um die Hauptseitenanschlagfläche 73 in einer vom Bediener gewählten Abstandsposition zum Eingreifvorsprung 40 zu fixieren.

Selbstverständlich ist es nicht zwingend notwendig, dass die Werkzeugführung sozusagen gleichzeitig die Verstelleinrichtung einer Führungsschablone gemäß der Erfindung bildet. Ein Ausführungsbeispiel einer Verstelleinrichtung 211 (Figur 4) verdeutlicht dies. Beispielsweise stehen eines oder mehrere Führungselemente 212, insbesondere Führungsstäbe, vor den Hauptseitenanschlag 60 in Richtung des Tragkörpers 20 vor und greifen in Führungsaufnahmen 113 desselben ein. Die Führungselemente 212 sind in den Führungsaufnahmen 213 längsverschieblich parallel zur Führungslängsachse L gelagert. Die Führungselemente 212 können beispielsweise anhand von Klemmeinrichtungen, Rasteinrichtungen oder dergleichen bezüglich der Führungslängsachse L in einer oder mehreren Positionen bezüglich des Tragkörpers 20 oder des Tragschenkels 22 fixierbar sein.

Weiterhin ist ein sozusagen fester Tiefenanschlag, d.h. ein fester Tiefeneinstell-Abstand T1 nicht zwingend notwendig. Dieser könnte auch verstellbar ausgestaltet sein, was anhand von Figur 8 noch deutlicher wird. So kann beispielsweise eine Tiefeneinstelleinrichtung 280 am Tragkörper 20 vorgesehen sein. Die Tiefeneinstelleinrichtung 280 umfasst beispielsweise ein Führungselement 281, welches koaxial zu dem Führungselement 88 ist. Das Führungselement 281 ist bezüglich der Führungslängsachse L längs verschieblich an der Führungsaufnahme 82 gelagert. Diese weist im Unterschied zu den bisherigen Ausführungsbeispielen nicht selbst die Tiefenanschlagfläche 83 auf. Vielmehr ist eine Tiefenanschlagfläche 283 an dem Führungselement 281, beispielsweise dessen freiem, vom Tragkörper 20 abgewandten Längsende oder Längsendbereich vorgesehen.

Das Führungselement 281 kann bezüglich des Tragkörpers 20 und insbesondere des Führungskörpers 81 in einer oder mehreren Längspositionen in Bezug auf die Führungslängsachse L fixiert werden, beispielsweise in Tiefeneinstell-Abständen T1 oder T2. Hierfür ist eine Fixiereinrichtung 282, beispielsweise eine Klemmschraube in derart wie bei der Fixiereinrichtung 90 vorgesehen.

An dieser Stelle sei noch ergänzt, dass selbstverständlich anstelle der Fixiereinrichtung 90 mit einer Klemmschraube auch jede andere Art Klemmung oder formschlüssige Fixierung möglich ist, so zum Beispiel mit einer Klemmmanschette oder einem Klemmring, welcher in einer Spannstellung des Außenumfangs des Führungselements 88 klemmt oder fixiert.

Ein in Figur 11 angedeutetes Führungselement 388 einer Werkzeugführung 385, welches beispielsweise in einem Führungskörper 381, der anstelle des Führungskörpers 81 am Tragkörper 20 vorgesehen sein kann, weist eine Innenumfangskontur 386 mit einer Flachgestalt auf. Die Innenumfangskontur 386 weist einander gegenüberliegende Längsseiten 387 auf, zwischen denen sich Schmalseiten 389, zum Beispiel gerundete Schmalseiten, erstrecken, die kürzer als die Längsseiten 387 sind. In oder an der Innenumfangskontur 386 kann beispielsweise das Fräswerkzeug 184 der Fräsmaschine 180 geführt werden, um eine Hauptseitenausnehmung in das Werkstück W1 oder W2 zu fräsen, die eine Flachgestalt aufweist, zum Beispiel entsprechend der Nebenseitenausnehmung NA.

Das Führungselement 388 kann an oder in einer Führungsaufnahme 382 (entsprechend der Führungsaufnahme 82) bezüglich der Führungslängsachse L längsverschieblich aufgenommen sein.

## Patentansprüche

1. Führungsschablone mit einer Werkzeugführung (85) für ein Arbeitswerkzeug (100), nämlich ein Bohrwerkzeug (107) oder Fräswerkzeug, zur Herstellung einer Hauptseitenausnehmung (HA) an einer Werkstückhauptseitenfläche (WH) eines Werkstücks (W), welches eine zu der Werkstückhauptseitenfläche (WH) winkelige Werkstücknebenseitenfläche (WN) aufweist, von der ausgehend sich eine Nebenseitenausnehmung (NA) in einem Abstand neben der Werkstückhauptseitenfläche (WH) in das Werkstück (W) hinein erstreckt, wobei die Führungsschablone (10) einen Hauptseitenanschlag (60) mit einer Hauptseitenanschlagfläche (73) zur Anlage an der Werkstückhauptseitenfläche (WH) und einen Nebenseitenanschlag (30) aufweist, der einen Eingreifvorsprung (40) zum Eingreifen in die Nebenseitenausnehmung (NA) aufweist, wobei sich eine Längsachse (E) des Eingreifvorsprungs (40) in Richtung der Werkzeugführung (85) zu einem Schnittbereich (SB), in dem sich die herzustellende Hauptseitenausnehmung (HA) und die Nebenseitenausnehmung (NA) schneiden, erstreckt und zu einer Führungslängsachse (L) der Werkzeugführung (85) winkelig, insbesondere rechtwinkelig, ist, wobei die Führungsschablone (10) einen Tiefenanschlag (80) mit einer Tiefenanschlagfläche (83) für einen dem Arbeitswerkzeug (100) zugeordneten Gegenanschlag (104) zur Begrenzung einer Eindringtiefe des Arbeitswerkzeugs (100) in das Werkstück (W) bezüglich der Führungslängsachse (L) aufweist, **dadurch gekennzeichnet, dass** der Tiefenanschlag (80) und der Eingreifvorsprung (40) an einem Tragkörper (20) angeordnet sind, an dem der Hauptseitenanschlag (60) anhand einer Verstelleinrichtung (11) zur Verstellung eines Hauptseitenanschlag-Abstands (A1, A2) der Hauptseitenanschlagfläche (73) zu dem Eingreifvorsprung (40) unter Beibehaltung eines Tiefeneinstell-Abstands (T1, T2) zwischen dem Eingreifvorsprung (40), insbesondere einer von der Hauptseitenanschlagfläche (73) abgewandten Seite des Eingreifvorsprungs (40), und der Tiefenanschlagfläche (83) verstellbar gelagert ist.

2. Führungsschablone (10) nach Anspruch 1, **dadurch gekennzeichnet, dass** ein Außenumfang (49) des Eingreifvorsprungs (40) eine Flachgestalt mit einander gegenüberliegenden Flachseiten (41) und sich zwischen den Flachseiten (41) erstreckenden, insbesondere gerundeten, Schmalseiten (42) zur Abstützung in der Nebenseitenausnehmung (NA) aufweist und/oder dass der Nebenseitenanschlag (30) zur Anlage an der Werkstücknebenseitenfläche (WN) eine Nebenseitenanschlagfläche (35) aufweist, vor die der Eingreifvorsprung (40) vorsteht.

3. Führungsschablone nach Anspruch 1 oder 2, **dadurch gekennzeichnet, dass** an einer Stirnseite (43) des Eingreifvorsprungs (40) eine Anschlagfläche zum Anschlagen an einem Boden der Nebenseitenausnehmung (NA) vorgesehen ist und/oder dass der Tiefenanschlag (80) derart eingestellt oder einstellbar ist, dass das Arbeitswerkzeug (100) bezüglich der Führungslängsachse (L) vor eine von der Hauptseitenanschlagfläche (73) abgewandte Seite, insbesondere Flachseite (41), des Eingreifvorsprungs (40) vorverstellbar ist.

4. Führungsschablone nach einem der vorhergehenden Ansprüche, **dadurch gekennzeichnet, dass** der Eingreifvorsprung (40) eine Aussparung (48), insbesondere eine Durchtrittsöffnung, für das Arbeitswerkzeug (100) aufweist und/oder dass der Eingreifvorsprung (40) mindestens eine mindestens eine Anlagefläche (48A) zur Anlage an dem Werkstück (W) unmittelbar neben der durch das Arbeitswerkzeug (100) herzustellenden Hauptseitenausnehmung (HA) aufweist.

5. Führungsschablone nach einem der vorhergehenden Ansprüche, **dadurch gekennzeichnet, dass** die Verstelleinrichtung (11) an der Werkzeugführung (85) angeordnet ist oder durch die Werkzeugführung (85) gebildet ist und/oder dass die Verstelleinrichtung (11) anhand eines bezüglich des Tragkörpers (20) entlang der Führungslängsachse (L) verstellbaren Führungselements (88) der Werkzeugführung (85) gebildet ist.

6. Führungsschablone nach einem der vorhergehenden Ansprüche, **dadurch gekennzeichnet, dass** die Tiefenanschlagfläche (83) bezüglich des Tragkörpers (20) feststehend ist oder dass die Führungsschablone eine Tiefeneinstelleinrichtung (280) zur Verstellung einer Relativposition der Tiefenanschlagfläche (83) bezüglich des Eingreifvorsprungs (40) aufweist.

7. Führungsschablone nach einem der vorhergehenden Ansprüche, **dadurch gekennzeichnet, dass** der Tragkörper (20) einen Tragschenkel (22) und einen Anlageschenkel (21) aufweist, die zueinander winkelig sind, wobei die Verstelleinrichtung (11) an dem Tragschenkel (22) und der Nebenseitenanschlag (30) mit dem Eingreifvorsprung (40) an dem Anlageschenkel (21) angeordnet sind.

8. Führungsschablone nach einem der vorhergehenden Ansprüche, **dadurch gekennzeichnet, dass** die Werkzeugführung (85) ganz oder teilweise an dem Hauptseitenanschlag (60) und/oder ganz oder teilweise an dem Tragkörper (20) angeordnet und/oder vorgesehen ist und/oder dass die Werkzeugführung (85) ausschließlich an einer einzigen, insbesondere von dem Tragkörper (20) separaten, Komponente der Führungsschablone (10) angeordnet und/oder vorgesehen ist und/oder dass die Werkzeugführung (85) bezüglich der Führungslängsachse (L) teleskopierbar ist und/oder dass die Werkzeugführung (85) dem Tragkörper (20) geführtes und/oder einen Bestandteil der Verstelleinrichtung (11) bildendes Führungselement (88) aufweist und/oder dass die Werkzeugführung (85) ausschließlich relativ zueinander unbewegliche Führungskonturen für das Arbeitswerkzeug (100) aufweist.

9. Führungsschablone nach einem der vorhergehenden Ansprüche, **dadurch gekennzeichnet, dass** der Tiefenanschlag (80) an der Werkzeugführung (85) oder neben der Werkzeugführung (85) vorgesehen ist und/oder einen Bestandteil der Werkzeugführung (85) bildet und/oder dass der Hauptseitenanschlag (60) an dem Tragkörper (20) durch ein Führungselement (88) der Werkzeugführung (85) bezüglich der Führungslängsachse (L) verstellbar gelagert und/oder fixierbar ist und/oder dass der Hauptseitenanschlag (60) unverdrehbar bezüglich der Führungslängsachse (L) an dem Tragkörper (20) geführt ist.

10. Führungsschablone nach einem der vorhergehenden Ansprüche, **dadurch gekennzeichnet, dass** der Tragkörper (20) eine insbesondere domartige oder hülsenartige Führungsaufnahme (82) für ein Führungselement (88) der Werkzeugführung (85) aufweist, wobei vorteilhaft vorgesehen ist, dass an der Führungsaufnahme (82) eine Fixiereinrichtung (90), insbesondere eine Klemmeinrichtung, zum Fixieren des Führungselements (88) der Werkzeugführung (85) bezüglich der Führungsaufnahme (82) angeordnet ist.

11. Führungsschablone nach einem der vorhergehenden Ansprüche, **dadurch gekennzeichnet, dass** sie, insbesondere die Verstelleinrichtung (11), eine Fixiereinrichtung (90), insbesondere eine Klemmeinrichtung und/oder Rasteinrichtung und/oder Verriegelungseinrichtung, zur Fixierung des Hauptseitenanschlags (60) bezüglich des Tragkörpers (20) in zumindest zwei voneinander verschiedenen Hauptseitenanschlag-Abständen (A1, A2) zwischen dem Eingreifvorsprung (40), insbesondere dem Außenumfang (49) des Eingreifvorsprungs (40), und der Hauptseitenanschlagfläche (73) aufweist.

12. Führungsschablone nach einem der vorhergehenden Ansprüche, **dadurch gekennzeichnet, dass** sie eine Absaugeinrichtung (50), insbesondere einen Absauganschluss (51), zur Absaugung von bei der Bearbeitung des Werkstücks (W) durch das Arbeitswerkzeug (100) entstehenden Partikeln aufweist, wobei vorteilhaft vorgesehen ist, dass die Absaugeinrichtung (50) mindestens eine Einsaugöffnung (46, 52) zum Einsaugen von Partikeln an dem Eingreifvorsprung (40) und/oder an und/oder neben einer zur Anlage an der Werkstückhauptseitenfläche (WH) oder Werkstücknebenseitenfläche (WN) vorgesehenen Anlagefläche oder Anschlagfläche, insbesondere der der Nebenseitenanschlagfläche (35) und/oder der Hauptseitenanschlagfläche (73), aufweist.

13. Führungsschablone nach einem der vorhergehenden Ansprüche, **dadurch gekennzeichnet, dass** die Hauptseitenanschlagfläche (73) und/oder eine oder die zur Anlage an der Werkstücknebenseitenfläche (WN) vorgesehene Nebenseitenanschlagfläche (35) Planflächen sind oder eine Plangestalt aufweisen.

14. Führungsschablone nach einem der vorhergehenden Ansprüche, **dadurch gekennzeichnet, dass** die Werkzeugführung (85) zur Führung des Arbeitswerkzeugs (100) eine Innenumfangskontur (86, 386) aufweist, die eine Führungsquerschnittsfläche begrenzt, wobei die Führungsquerschnittsfläche kreisrund ist oder eine Flachgestalt mit Längsseiten (387) und gegenüber den Längsseiten kürzeren Schmalseiten (389) aufweist, die zweckmäßigerweise gerundet sind.

15. Führungsschablone nach einem der vorhergehenden Ansprüche, **dadurch gekennzeichnet, dass** sie einen Bestandteil eines Systems bildet, welches das Arbeitswerkzeug (100) umfasst, wobei vorteilhaft vorgesehen ist, dass das System eine Hand-Werkzeugmaschine (110) mit einem Antriebsmotor zum Antreiben des Arbeitswerkzeugs (100) umfasst.

## Claims

1. A guide template having a tool guide (85) for a working tool (100), namely a drilling tool (107) or milling tool, for producing a main-side cut-out (HA) on a workpiece main-side surface (WH) of a workpiece (W), which workpiece has a workpiece secondary-side surface (WN), which is at an angle to the workpiece main-side surface (WH) and proceeding from which a secondary-side cut-out (NA) extends into the workpiece (W) next to the workpiece main-side surface (WH) at a distance therefrom, wherein the guide template (10) comprises a main-side stop (60) having a main-side stop surface (73) for making contact with the workpiece main-side surface (WH) and comprises a secondary-side stop (30), which has an engagement protrusion (40) for engaging the secondary-side cut-out (NA), wherein a longitudinal axis (E) of the engagement protrusion (40) extends toward the tool guide (85) to an intersection region (SB), in which the main-side cut-out (HA) to be produced and the secondary-side cut-out (NA) intersect, and is at an angle, in particular a right angle, to a guide longitudinal axis (L) of the tool guide (85), wherein the guide template (10) comprises a depth stop (80) having a depth stop surface (83) for a counter stop (104) assigned to the working tool (100) for limiting the penetration depth of the working tool (100) into the workpiece (W) with respect to the guide longitudinal axis (L), **characterized in that** the depth stop (80) and the engagement protrusion (40) are arranged on a carrier body (20), on which the main-side stop (60) is mounted for adjustment by means of an adjusting device (11) for adjusting a main-side stop distance (A1, A2) of the main-side stop surface (73) with respect to the engagement protrusion (40) while a depth-setting distance (T1, T2) is retained between the engagement protrusion (40), particularly a side of the engagement protrusion (40) facing away from the main-side stop surface (73), and the depth stop surface (83).

2. The guide template (10) according to claim 1, **characterized in that** an outer circumference (49) of the engagement protrusion (40) has a flat shape with flat sides (41) opposite one another and narrow sides (42) extending between the flat sides (41), particularly rounded narrow sides, for support in the secondary-side cut-out (NA) and/or **in that** the secondary-side stop (30) has a secondary-side stop surface (35) for making contact with the workpiece secondary-side surface (WN), in front of said secondary-side stop surface the engagement protrusion (40) protrudes.

3. The guide template according to claim 1 or 2, **characterized in that** a stop surface for making contact with a base of the secondary-side cut-out (NA) is provided on an end face (43) of the engagement protrusion (40) and/or **in that** the depth stop (80) is adjusted or can be adjusted to the extent that the working tool (100) is pre-adjustable, as relates to the guide longitudinal axis (L), in front of a side, particularly a flat side (41), of the engagement protrusion (40), said side facing away from the main-side stop surface (73).

4. The guide template according to any of the preceding claims, **characterized in that** the engagement protrusion (40) has a cut-out (48), particularly a passage, for the working tool (100) and/or **in that** the engagement protrusion (40) has at least one contact surface (48A) for making contact with the workpiece (W) directly next to the main-side cut-out (HA) to be produced by the working tool (100).

5. The guide template according to any of the preceding claims, **characterized in that** the adjusting device (11) is arranged on the tool guide (85) or formed by the tool guide (85) and/or **in that** the adjusting device (11) is formed by means of a guide element (88) of the tool guide (85), said guide element being adjustable along the guide longitudinal axis (L) as relates to the carrier body (20).

6. The guide template according to any of the preceding claims, **characterized in that** the depth stop surface (83) is fixed in position as relates to the carrier body (20) or **in that** the guide template has a depth-setting device (280) for adjusting a relative position of the depth stop surface (83) as relates to the engagement protrusion (40).

7. The guide template according to any of the preceding claims, **characterized in that** the carrier body (20) has a carrier leg (22) and a contact leg (21), which are at an angle to one another, wherein the adjusting device (11) is arranged on the carrier leg (22) and the secondary-side stop (30) with the engagement protrusion (40) is arranged on the contact leg (21).

8. The guide template according to any of the preceding claims, **characterized in that** the tool guide (85) is arranged and/or provided completely or partially on the main-side stop (60) and/or completely or partially on the carrier body (20) and/or **in that** the tool guide (85) is arranged and/or provided exclusively on one single component, particularly separate from the carrier body (20), of the guide template (10) and/or **in that** the tool guide (85) can be telescopic as relates to the guide longitudinal axis (L) and/or **in that** the tool guide (85) has a guide element (88) guiding the carrier body (20) and/or forming a component of the adjusting device (11) and/or **in that** the tool guide (85) has guiding contours, which are exclusively unmovable with respect to one another, for the working tool (100).

9. The guide template according to any of the preceding claims, **characterized in that** the depth stop (80) is provided on the tool guide (85) or next to the tool guide (85) and/or forms a component of the tool guide (85) and/or **in that** the main-side stop (60) is adjustably mounted and/or can be fixed on the carrier body (20) by a guide element (88) of the tool guide (85) as relates to the guide longitudinal axis (L) and/or **in that** the main-side stop (60) is guided on the carrier body (20) in a non-twisting manner as relates to the guide longitudinal axis (L).

10. The guide template according to any of the preceding claims, **characterized in that** the carrier body (20) has particularly a dome-like or bush-like guide mount (82) for a guide element (88) of the tool guide (85), wherein it is advantageously provided that a position-fixing device (90), particularly a clamping device, is arranged on the guide mount (82) for fixing the position of the guide element (88) of the tool guide (85) as relates to the guide mount (82).

11. The guide template according to any of the preceding claims, **characterized in that** the guide template, particularly the adjusting device (11), has a position-fixing device (90), particularly a clamping device and/or latching device and/or locking device, for fixing the main-side stop (60) in at least two different main-side stop distances (A1, A2) between the engagement protrusion (40), particularly the outer circumference (49) of the engagement protrusion (40), and the main-side stop surface (73), as relates to the carrier body (20).

12. The guide template according to any of the preceding claims, **characterized in that** it has a suction device (50), particularly a suction connection (51), for suctioning particles which result during machining of the workpiece (W) by the working tool (100), wherein it is advantageously provided that the suction device (50) has at least one intake opening (46, 52) for suctioning particles on the engagement protrusion (40) and/or on and/or next to a contact surface or stop surface, particularly the secondary-side stop surface (35) and/or the main-side stop surface (73), provided for establishing contact with the workpiece main-side surface (WH) or workpiece secondary-side surface (WN).

13. The guide template according to any of the preceding claims, **characterized in that** the main-side stop surface (73) and/or a or the secondary-side stop surface (35) provided to establish contact with the workpiece secondary-side surface (WN) are flat surfaces or have a flat shape.

14. The guide template according to any of the preceding claims, **characterized in that** the tool guide (85) for guiding the working tool (100) has an inner circumferential contour (86, 386), which limits a guide cross-sectional surface, wherein the guide cross-sectional surface is circular or has a flat shape with longitudinal sides (387) and narrow sides (389), which are expediently rounded, and which are shorter as relates to the longitudinal sides.

15. The guide template according to any of the preceding claims, **characterized in that** it forms a component of a system, which comprises the working tool (100) and/or **in that** the system comprises a manual power tool (110) with a drive motor for driving the working tool (100)

## Revendications

1. Gabarit de guidage avec un guide d'outil (85) pour un outil de travail (100), à savoir un outil de forage (107) ou outil de fraisage, pour la fabrication d'un évidement latéral principal (HA) au niveau d'une surface latérale principale de pièce à usiner (WH) d'une pièce à usiner (W) qui présente une surface latérale accessoire de pièce à usiner (WN) angulaire à la surface latérale principale de pièce à usiner (WH), à partir de laquelle s'étend un évidement latéral accessoire (NA) à une distance à côté de la surface latérale principale de pièce à usiner (WH) dans la pièce à usiner (W), dans lequel le gabarit de guidage (10) présente une butée latérale principale (60) avec une surface de butée latérale principale (73) pour l'appui contre la surface latérale principale de pièce à usiner (WH) et une butée latérale accessoire (30) qui présente une saillie de prise (40) pour la mise en prise dans l'évidement latéral accessoire (NA), dans lequel un axe longitudinal (E) de la saillie de prise (40) s'étend en direction du guide d'outil (85) vers une zone de coupe (SB), dans laquelle l'évidement latéral principal (HA) à fabriquer et l'évidement latéral accessoire (NA) se coupent, et est angulaire, en particulier à angle droit par rapport à un axe longitudinal de guidage (L) du guide d'outil (85), dans lequel le gabarit de guidage (10) présente une butée de profondeur (80) avec une surface de butée de profondeur (83) pour une contre-butée (104) associée à l'outil de travail (100) pour la limitation d'une profondeur de pénétration de l'outil de travail (100) dans la pièce à usiner (W) par rapport à l'axe longitudinal de guidage (L), **caractérisé en ce que** la butée de profondeur (80) et la saillie de prise (40) sont agencées au niveau d'un corps porteur (20), au niveau duquel la butée latérale principale (60) est logée de manière réglable à l'aide d'un dispositif de réglage (11) pour le réglage d'une distance de la butée latérale principale (A1, A2) de la surface de butée latérale principale (73) par rapport à la saillie de prise (40) en conservant une distance de réglage de profondeur (T1, T2) entre la saillie de prise (40), en particulier un côté éloigné de la surface de butée latérale principale (73) de la saillie de prise (40), et la surface de butée de profondeur (83).

2. Gabarit de guidage (10) selon la revendication 1, **caractérisé en ce qu'**une périphérie extérieure (49) de la saillie de prise (40) présente une forme plate avec des côtés plats (41) opposés les uns aux autres et des côtés étroits (42) s'étendant entre les côtés plats (41), en particulier arrondis pour l'appui dans l'évidement latéral accessoire (NA) et/ou que la butée latérale accessoire (30) présente pour l'appui contre la surface latérale accessoire de pièce à usiner (WN) une surface de butée latérale accessoire (35), de laquelle la saillie de prise (40) dépasse.

3. Gabarit de guidage selon la revendication 1 ou 2, **caractérisé en ce qu'**une surface de butée pour la butée contre un fond de l'évidement latéral accessoire (NA) est prévue au niveau d'un côté frontal (43) de la saillie de prise (40) et/ou que la butée de profondeur (80) est ou peut être réglée de telle manière que l'outil de travail (100) soit préréglable par rapport à l'axe longitudinal de guidage (L) devant un côté éloigné de la surface de butée latérale principale (73), en particulier le côté plat (41), de la saillie de prise (40).

4. Gabarit de guidage selon l'une quelconque des revendications précédentes, **caractérisé en ce que** la saillie de prise (40) présente un évidement (48), en particulier une ouverture de passage pour l'outil de travail (100) et/ou que la saillie de prise (40) présente au moins une surface d'appui (48A) pour l'appui contre la pièce à usiner (W) directement à côté de l'évidement latéral principal (HA) à fabriquer par l'outil de travail (100).

5. Gabarit de guidage selon l'une quelconque des revendications précédentes, **caractérisé en ce que** le dispositif de réglage (11) est agencé au niveau du guide d'outil (85) ou est formé par le guide d'outil (85) et/ou que le dispositif de réglage (11) est formé à l'aide d'un élément de guidage (88) réglable par rapport au corps porteur (20) le long de l'axe longitudinal de guidage (L) du guide d'outil (85).

6. Gabarit de guidage selon l'une quelconque des revendications précédentes, **caractérisé en ce que** la surface de butée de profondeur (83) est fixe par rapport au corps porteur (20) ou que le gabarit de guidage présente un dispositif de réglage de profondeur (280) pour le réglage d'une position relative de la surface de butée de profondeur (83) par rapport à la saillie de prise (40).

7. Gabarit de guidage selon l'une quelconque des revendications précédentes, **caractérisé en ce que** le corps porteur (20) présente une branche porteuse (22) et une branche d'appui (21) qui sont angulaires l'une à l'autre, dans lequel le dispositif de réglage (11) est agencé au niveau de la branche porteuse (22) et la butée latérale accessoire (30) est agencée avec la saillie de prise (40) au niveau de la branche d'appui (21).

8. Gabarit de guidage selon l'une quelconque des revendications précédentes, **caractérisé en ce que** le guide d'outil (85) est agencé et/ou prévu entièrement ou partiellement au niveau de la butée latérale principale (60) et/ou entièrement ou partiellement au niveau du corps porteur (20) et/ou que le guide d'outil (85) est agencé et/ou prévu exclusivement au niveau d'un seul composant séparé en particulier du corps porteur (20) du gabarit de guidage (10) et/ou que le guide d'outil (85) est télescopique par rapport à l'axe longitudinal de guidage (L) et/ou que le guide d'outil (85) présente un élément de guidage (88) guidé vers le corps porteur (20) et/ou formant un constituant du dispositif de réglage (11) et/ou que le guide d'outil (85) présente des contours de guidage immobiles exclusivement l'un par rapport à l'autre pour l'outil de travail (100).

9. Gabarit de guidage selon l'une quelconque des revendications précédentes, **caractérisé en ce que** la butée de profondeur (80) est prévue sur le guide d'outil (85) ou à côté du guide d'outil (85) et/ou forme un constituant du guide d'outil (85) et/ou que la butée latérale principale (60) est logée et/ou peut être fixée de manière réglable au niveau du corps porteur (20) par un élément de guidage (88) du guide d'outil (85) par rapport à l'axe longitudinal de guidage (L) et/ou que la butée latérale principale (60) est guidée de manière non rotative par rapport à l'axe longitudinal de guidage (L) au niveau du corps porteur (20).

10. Gabarit de guidage selon l'une quelconque des revendications précédentes, **caractérisé en ce que** le corps porteur (20) présente un logement de guidage (82) en particulier de type dôme ou douille pour un élément de guidage (88) du guide d'outil (85), dans lequel il est avantageusement prévu qu'un dispositif de fixation (90), en particulier un dispositif de serrage soit agencé au niveau du logement de guidage (82) pour la fixation de l'élément de guidage (88) du guide d'outil (85) par rapport au logement de guidage (82).

11. Gabarit de guidage selon l'une quelconque des revendications précédentes, **caractérisé en ce qu'**il, en particulier le dispositif de réglage (11), présente un dispositif de fixation (90), en particulier un dispositif de serrage et/ou dispositif d'encliquetage et/ou dispositif de verrouillage pour la fixation de la butée latérale principale (60) par rapport au corps porteur (20) dans au moins deux distances de butée latérale principale (A1, A2) différentes l'une de l'autre entre la saillie de prise (40), en particulier la périphérie extérieure (49) de la saillie de prise (40), et la surface de butée latérale principale (73).

12. Gabarit de guidage selon l'une quelconque des revendications précédentes, **caractérisé en ce qu'**il présente un dispositif d'aspiration (50), en particulier un raccord d'aspiration (51), pour l'aspiration de particules apparaissant lors de l'usinage de la pièce à usiner (W) par l'outil de travail (100), dans lequel il est avantageusement prévu que le dispositif d'aspiration (50) présente au moins une ouverture d'aspiration (46, 52) pour l'aspiration de particules au niveau de la saillie de prise (40) et/ou au niveau de et/ou à côté d'une surface d'appui prévue pour l'appui contre la surface latérale principale de pièce à usiner (WH) ou surface latérale accessoire de pièce à usiner (WN) ou surface de butée, en particulier de la surface de butée latérale accessoire (35) et/ou la surface de butée latérale principale (73).

13. Gabarit de guidage selon l'une quelconque des revendications précédentes, **caractérisé en ce que** la surface de butée latérale principale (73) et/ou une ou la surface de butée latérale accessoire (35) prévue pour l'appui contre la surface latérale accessoire de pièce à usiner (WN) sont des surfaces planes ou présentent une forme plane.

14. Gabarit de guidage selon l'une quelconque des revendications précédentes, **caractérisé en ce que** le guide d'outil (85) présente pour le guidage de l'outil de travail (100) un contour périphérique intérieur (86, 386) qui délimite une aire de section de guidage, dans lequel l'aire de section de guidage est ronde et circulaire ou présente une forme plate avec des côtés longitudinaux (387) et des côtés étroits (389) plus courts par rapport aux côtés longitudinaux, qui sont arrondis de manière appropriée.

15. Gabarit de guidage selon l'une quelconque des revendications précédentes, **caractérisé en ce qu'**il forme un constituant d'un système qui comporte l'outil de travail (100), dans lequel il est avantageusement prévu que le système comporte une machine-outil portative (110) avec un moteur d'entraînement pour l'entraînement de l'outil de travail (100).
